# EUROPÄISCHE PATENTSCHRIFT

(11) **EP 0 642 957 B1**
(45) Veröffentlichungstag und Bekanntmachung des Hinweises auf die Patenterteilung: **29.10.1997**
(21) Anmeldenummer: 94113674.9
(22) Anmeldetag: 01.09.1994
(51) Int. Cl.: B60R 22/20

(54) **Höheneinstellbarer Umlenkbeschlag für Sicherheitsgurte**
Height adjustable return loop fitting for safety belts
Dispositif de renvoi latéral réglable en hauteur pour ceintures de sécurité

(30) Priorität: 15.01.1994 DE 9400638 U; 10.09.1993 DE 9313577 U
(43) Veröffentlichungstag der Anmeldung: 15.03.1995
(60) Teilanmeldung: 96118674.9
(73) Patentinhaber: R. SCHMIDT GMBH, D-57368 Lennestadt (DE)
(72) Erfinder: Stenzel, Wolfgang, D-59889 Eslohe - Cobbenrode (DE)
(74) Vertreter: Köchling, Conrad-Joachim

(56) Entgegenhaltungen:
- DE-U- 8 709 069
- DE-U- 9 303 104

## Beschreibung

Die Erfindung betrifft ein Kraftfahrzeug mit einem Karosserieteil, einer B- oder C-Säule und mit daran befestigbarem, höheneinstellbaren Umlenkbeschlag für Sicherheitsgurte zur Anordnung in dem Kraftfahrzeug, bestehend aus einer ortsfest an dem Karosserieteil oder der Säule befestigbaren Schiene und einem an der Schiene rastend verstellbar geführten Schlitten als Halterung für den Umlenkbeschlag, wobei die Schiene orthogonal von den Randkanten der Schiene zur Schienenrückseite abragende Haltehakenpaare aufweist, die in säulenseitige Lochungen oder Lochungen des Karosserieteiles einsetzbar sind.

Aus der DE 93 03 104 U1 ist ein Umlenkbeschlag gemäß Oberbegriff des Anspruches 1 bekannt.

Um dabei die insbesondere im Crashfall auftretenden Kräfte bezüglich der Angriffspunkte an der Karosseriesäule aufnehmen zu können, ist es erforderlich, daß im Bereich der Haken Verstärkungsbleche untergelegt werden, wodurch diese Konstruktion insgesamt verkompliziert und verteuert wird.

Bei solchen mit Hakenpaaren versehenen Umlenkbeschlagen ist die Widerstandskraft gegen auftretende Zugkräfte, insbesondere im Crashfall, noch nicht befriedigend.

Ausgehend von dem eingangs bezeichneten Stand der Technik liegt der Erfindung die Aufgabe zugrunde, ein Kraftfahrzeug mit einem Umlenkbeschlag gattungsgemäßer Art zu schaffen, der geeignet ist, hohe Zugkräfte aufzunehmen, wie sie beispielsweise im Crashfall auftreten.

Zur Lösung dieser Aufgabe wird vorgeschlagen,
daß die säulenseitige Lochung oder Lochung des Karosserieteiles für ein Haltehakenpaar als Fensterausschnitt ausgebildet ist, daß der erste Haltehaken eines Haltehakenpaares einen Verlängerungsbereich aufweist, der an das freie Ende des Haltehakens anschließt, und der zweite Haltehaken des Haltehakenpaares einen Verlängerungsbereich aufweist, der an das unfreie Ende des Haltehakens anschließt,
daß beide Verlängerungsbereiche rückseitig der Schiene quer zum Schienenlängsverlauf gerichtet sind und sich mit ihrem freien Ende am unfreien Ende des ersten Haltehakens oder am freien Ende des zweiten Haltehakens abstützen, wobei der so aus den Haltehaken und den Verlängerungen gebildete Rahmen in den Fensterausschnitt der Säule oder dergleichen Karosserieteil einsteckbar ist und die Haltehaken bei in den Ausschnitt eingestecktem und in Schienenlängsrichtung verschobener Schiene die eine, quer zur Schienenlängserstreckung gerichtete und in vertikaler Einbausollage unten befindliche Randkante des Ausschnittes übergreifen.

Durch diese Ausbildung wird ein quasi selbst stabilisierendes Hakenpaar realisiert, welches zur Aufnahme von hohen Zugkräften geeignet ist, wie sie beispielsweise im Crashfall auftreten.

Bevorzugt ist dabei vorgesehen, daß der erste Haltehaken samt Verlängerung durch einen etwa L-förmigen, einstückig mit der Schiene ausgebildeten Materialstreifen gebildet ist, der um das Ende des kurzen Schenkels um 90° zur Rückseite der Schiene hin abgebogen ist und dessen langer Schenkel im Anschlußbereich an den kurzen Schenkel zur Bildung des Haltehakens parallel zur Schiene gerichtet verläuft, wobei dessen freies Ende, das den Verlängerungsbereich bildet, um 90° quer zur Schienenlängserstreckung zum zweiten Haltehaken hin gerichtet abgebogen ist.

Desweiteren ist bevorzugt, daß der zweite Haltehaken samt Verlängerung durch einen etwa T-förmigen einstückig mit der Schiene ausgebildeten Materialstreifen gebildet ist, der um das Ende des Fußteiles der T-Form um 90° zur Rückseite der Schiene hin gebogen ist, wobei das eine Ende des Quersteges der T-Form parallel zum ersten Haltehaken gerichtet verläuft und den zweiten Haltehaken bildet, während das andere Ende des Quersteges der T-Form, das den Verlängerungsbereich bildet, um 90° quer zur Schienenlängserstreckung zum kurzen Schenkel des L-förmigen Materialstreifens hin gerichtet abgebogen ist.

Um die Anordnung von Verstärkungsblechen oder dergleichen im Eingriffsbereich der Haken zu vermeiden ist zudem vorgesehen, daß der zwischen den Haltehaken und den Verlängerungsbereichen einerseits und der Schiene andererseits gebildete Schlitz gering breiter ist als der Materialstärke der Säule im Bereich des Fensterausschnittes entspricht.

Durch die angegebene Ausbildung wird neben den oben angegebenen Vorteilen noch eine kostengünstige Fertigung ermöglicht. Um die Lastverteilung und Kraftaufnahmemöglichkeit eines solchen Umlenkbeschlages noch weiter zu verbessern, wird vorgeschlagen, daß die Schiene nahe ihrer beiden Längsenden und im Mittellängsbereich Haltehakenpaare aufweist, daß die von den Haken übergreifbaren Bereiche der Säulen oder dergleichen Karosserieteilen verstärkungslos ausgebildet sind.

Bevorzugt ist dabei vorgesehen, daß mindestens drei Hakenpaare ausgebildet sind, von denen zwei Paare nahe der Schienenenden und eines etwa mittig zwischen diesen angeordnet sind.

Unter Umständen kann auch vorgesehen sein, daß das in Einbaurichtung obere Ende der Schiene über die dortigen Haken verlängert ist und in diesem Bereich von einer an der Karosseriesäule befestigbaren Kopfschraube durchsetzbar ist.

Dabei ist es auch möglich, anstelle der Schraube einen Niet einzusetzen. Im Bereich der Schraubenbefestigung ist keine komplizierte Gewindeausbildung erforderlich, da diese Schraube nur zur Festlegung der Schiene dient, nicht aber wesentliche Kräfte aufnehmen muß.

Bevorzugt ist zudem vorgesehen, daß die Haken samt Verlängerungsbereichen aus abgewinkelten Randkanten der Schiene ausgeformt sind.

Durch die erfindungsgemäße Ausbildung, die die Anordnung von mindestens drei Hakenpaaren, gegebenenfalls auch noch mehr, vorsieht, wird erreicht, daß bei Belastung der Schiene, beispielsweise im Crashfall, die Kräfte auf die gesamte Schienenlänge gleichmäßig verteilt in die Karosseriesäule eingeleitet werden, so daß die Anordnung von zusätzlichen Verstärkungsblechen oder dergleichen in der Säule entfallen kann. Hieraus resultieren nicht nur erhebliche Kostenersparnisse, sondern auch die Montage, die Fertigung und die Lagerhaltung ist vereinfacht. Auch kann bei dieser Anordnung die an sich übliche Schraubenbefestigung stark vereinfacht werden oder auch ganz entfallen. Es ist auch möglich die Schiene durch Klebstoff, durch einen Niet oder andere Verbindungsmittel lagerichtig zu haltern, ohne daß dies der bestimmungsgemäßen Benutzung und Lastaufnahme abträglich wäre.

Schematisierte Ausführungsbeispiele der Erfindung sind in der Zeichnung dargestellt und im folgenden näher beschrieben.
Es zeigt:
- Fig. 1: Einen höhenverstellbaren Umlenkbeschlag in Montagesollposition im Längsschnitt gesehen;
- Fig. 2: eine Einzelheit in Abwicklung in Ansicht;
- Fig. 3: die Einzelheit im Sollzustand;
- Fig. 4 und 5: eine andere Ausführungsform in Seitenansicht und Draufsicht.

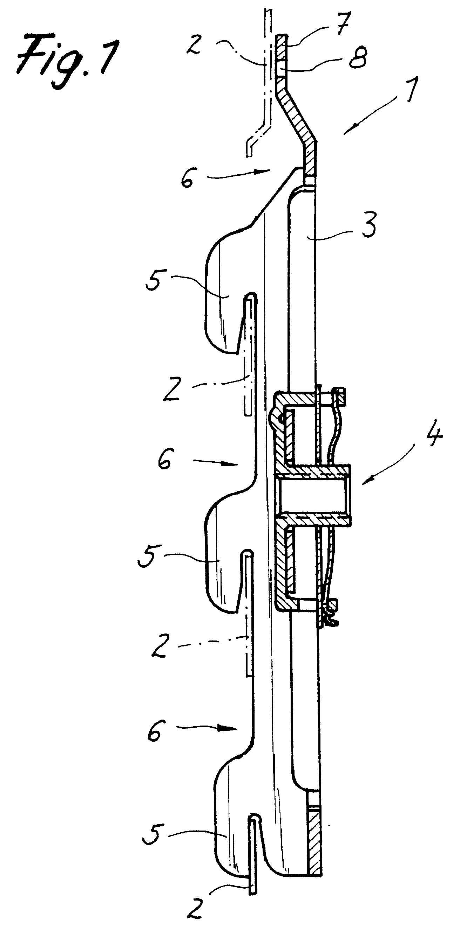

Der höheneinstellbare Umlenkbeschlag 1 besteht im wesentlichen aus einer ortsfest an einer Karosseriesäule 2 befestigbaren Schiene 3, die im Querschnitt U-förmig ausgebildet ist und aus Stahl besteht. An der Schiene 3 ist ein Schlitten 4 vorzugsweise rastend verstellbar geführt, der als Halterung für den Umlenkbeschlag des Sicherheitsgurtes dient. Die Schiene 3 weist von ihren Randkanten abragende Haltehakenpaare 5 auf, die jeweils paarweise niveaugleich angeordnet sind und die in säulenseitige Fensterausschnitte 6 einsetzbar sind. Vorzugsweise weist die Schiene 3 nahe ihrer beiden Längsenden und im Mittelbereich solche Paare von Haltehaken 5 auf, wobei die von den Haken übergreifbaren Bereiche der Karosseriesäulen 2 oder dergleichen Karosserieteile verstärkungslos ausgebildet sind. Vorzugsweise sind mindestens drei Hakenpaare von Haken 5 angeordnet, wie beispielsweise in Figur 1 ersichtlich. Dabei sind zwei Paare nahe der Schienenenden (oben und unten) und eines etwa mittig zwischen diesen angeordnet.

Das in Einbaurichtung obere Ende der Schiene 3 ist über die dortigen Haken 5 hinaus verlängert, wobei in diesen verlängertem Bereich 7 eine Lochung 8 vorgesehen ist, die eine Befestigungsschraube oder auch einen Befestigungsniet einbringbar ist, die bzw. der zur Befestigung dieses Bereiches 7 an dem entsprechenden darunterliegenden Säulenteil 2 dient. Die Haken 5 sind aus abgewinkelten Randkanten der Schiene 3 ausgeformt, beispielsweise ausgestanzt.

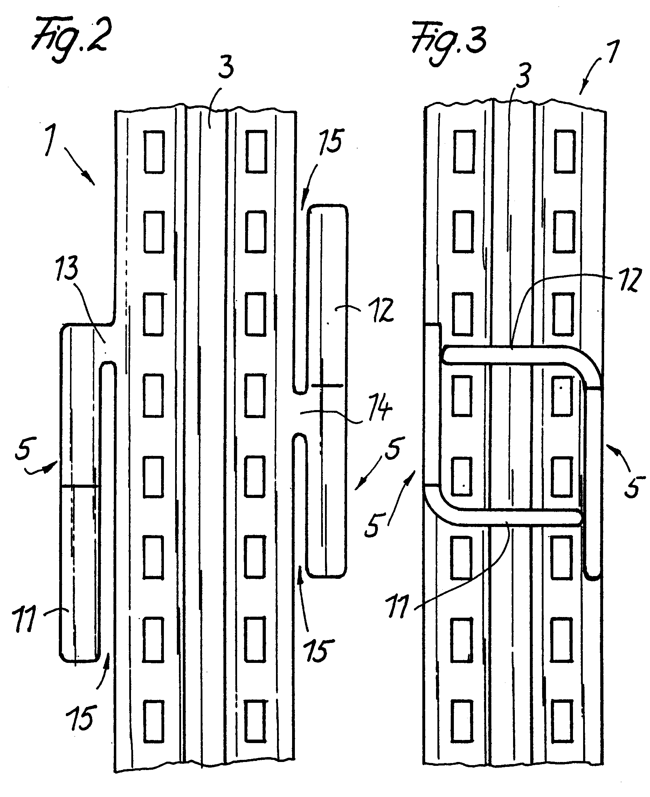

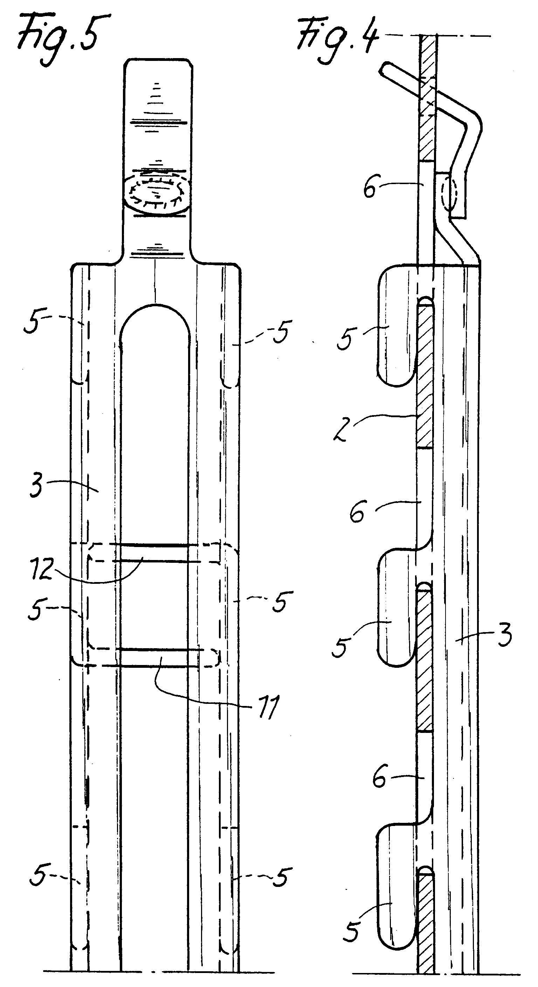

Wesentliche Elemente der Erfindung sind in den Figuren 2 und 3 gezeigt.

Wie schon oben ausgeführt, ist die säulenseitige Lochung für jeweils ein Haltehakenpaar 5 als Fensterausschnitt 6 ausgebildet. Der erste Haltehaken 5 eines jeden Haltehakenpaares weist einen Verlängerungsbereich 11 auf, der an das freie Ende des Haltehakens 5 anschließt. Auch der zweite Haltehaken 5 des Haltehakenpaares weist einen Verlängerungsbereich 12 auf, der an das unfreie Ende des Haltehakens 5 anschließt.

Beide Verlängerungsbereiche 11, 12 sind in der Fertigungsendposition rückseitig der Schiene 3 quer zum Schienenlängsverlauf gerichtet. Sie stützen sich mit ihrem freien Ende am unfreien Ende des ersten Haltehakens 5 oder am freien Ende des zweiten Haltehakens 5 ab, wobei der so aus den Haltehaken 5 und den Verlängerungen 11, 12 gebildete Rahmen, wie dies insbesondere aus Figur 3 ersichtlich ist, in den Fensterausschnitt der Säule 2 oder dergleichen Karosserieteil einsteckbar ist. Die Schiene wird also mit diesen "Rahmenelementen" orthogonal der entsprechenden Säule 2 zugeführt, so daß der aus den Teilen 5, 11 und 12 gebildete Rahmen in den jeweiligen Fensterausschnitt eingesetzt werden kann und dann durch Verschiebung der Schiene 3 in Längsrichtung relativ nach unten die Haltehaken 5 die in vertikaler Einbausollage unten befindliche Randkante des Ausschnittes 6 übergreifen. Diese Position ist in Figur 1 verdeutlicht. Die freien Enden der Verlängerungen 11, 12 können im Fertigungszustand auch so ausgerichtet sein, daß sie geringen Abstand vom freien Ende des entsprechenden Haltehakens 5 bzw. vom unfreien Ende des Haltehakens 5 auf der anderen Seite haben. Es ist aber auch möglich, die Enden der Verlängerungen 11, 12 an den entsprechenden Bereichen der Haltehaken 5 zu fixieren, beispielsweise anzuheften oder anzuschweißen.

In den Figuren 2 und 3, die jeweils die Schiene 3 von der Rückseite her zeigen, zeigt die Figur 2 den Materialzuschnitt (Stanzzuschnitt) vor der Biegung der Haltehaken 5 und der Verlängerungen 11, 12. Der erste Haltehaken 5, der in den Zeichnungsfiguren 2 und 3 jeweils links gezeigt ist, ist samt Verlängerung 11 durch einen etwa L-förmigen, einstückig an die Schiene 3 angeschnittenen Materialstreifen gebildet, der um das Ende des kurzen Schenkels 13 um 90° zur Rückseite der Schiene 3 hin abgebogen wird, so daß die Position gemäß Figur 3 erreicht wird. Dessen langer Schenkel verläuft im Anschlußbereich an den kurzen Schenkel 13 zur Bildung des Haltehakens 5 zunächst parallel zur Schienenlängsrichtung. Sein freies Ende, das den Verlängerungsbereich 11 bildet, ist um 90° quer zur Schienenlängserstreckung zum zweiten Haltehaken 5 auf der rechten Schienenseite gemäß Figur 2 und 3 hingerichtet abgebogen und stößt an das freie Ende des rechten Haltehakens 5 an.

Der zweite Haltehaken 5, der gemäß Figur 2 und 3 ausgebildet ist, ist samt Verlängerung 12 durch einen etwa T-förmigen, einstückig an die Schiene angeschnittenen Materialstreifen gebildet, der um das Ende des Fußteils 14 der T-Form um 90° zur Rückseite der Schiene 3 hin abgebogen ist, wie insbesondere aus Figur 3 ersichtlich, wobei das eine Ende des Quersteges der T-Form parallel zum ersten Haltehaken 5 gerichtet verläuft und den zweiten Haltehaken 5 bildet, während das andere Ende des Quersteges der T-Form, daß den Verlängerungsbereich 12 bildet, um 90° quer zur Schienenlängsersteckung zum kurzen Schenkel des L-förmigen Materialstreifens hin abgebogen ist und somit an das schienenfeste Ende des Haltehakens 5 im Bereich 13 anstößt.

Der zwischen den Haltehaken 5 und den Verlängerungsbereichen 11 einerseits und der Schiene 3 andererseits gebildete Schlitz 15 ist gering breiter, als der Materialstärke der Säule 2 im Bereich des Fensterausschnittes 6 entspricht. Durch diese Gestaltung wird ein quasi selbst stabilisierendes sich aneinander abstützendes Hakenpaar gebildet, woraus in der Einbausollposition die Aufnahme von sehr hohen Zugkräften, beispielsweise im Crashfall ermöglicht ist.

## Patentansprüche

1. Kraftfahrzeug mit einem Karosserieteil, einer B- oder C-Säule und mit daran befestigbarem, höheneinstellbarem Umlenkbeschlag für Sicherheitsgurte zur Anordnung in dem Kraftfahrzeug, bestehend aus einer ortsfest an dem Karosserieteil oder der Säule befestigbaren Schiene und einem an der Schiene rastend verstellbar geführten Schlitten als Halterung für den Umlenkbeschlag, wobei die Schiene orthogonal von den Randkanten der Schiene zur Schienenrückseite abragende Haltehakenpaare aufweist, die in säulenseitige Lochungen oder Lochungen des Karosserieteiles einsetzbar sind, **dadurch gekennzeichnet,** daß die säulenseitige Lochung oder Lochung des Karosserieteiles für ein Haltehakenpaar (5) als Fensterausschnitt (6) ausgebildet ist, daß der erste Haltehaken (5) eines Haltehakenpaares einen Verlängerungsbereich (11) aufweist, der an das freie Ende des Haltehakens (5) anschließt, und der zweite Haltehaken (5) des Haltehakenpaares einen Verlängerungsbereich (12) aufweist, der an das unfreie Ende des Haltehakens (5) anschließt, daß beide Verlängerungsbereiche (11,12) rückseitig der Schiene (3) quer zum Schienenlängsverlauf gerichtet sind und sich mit ihrem freien Ende am unfreien Ende des ersten Haltehakens (5) oder am freien Ende des zweiten Haltehakens (5) abstützen, wobei der so aus den Haltehaken (5) und den Verlängerungen (11,12) gebildete Rahmen in den Fensterauschnitt (6) der Säule (2) oder dergleichen Karosserieteil einsteckbar ist und die Haltehaken (5) bei in den Ausschnitt (6) eingestecktem und in Schienenlängsrichtung verschobener Schiene (3) die eine, quer zur Schienenlängserstreckung gerichtete und bei vertikaler Einbausollage unten befindliche Randkante des Ausschnittes (6) übergreifen.

2. Kraftfahrzeug nach Anspruch 1, **dadurch gekenn zeichnet, daß** der erste Haltehaken (5) samt Verlängerung (11) durch einen etwa L-förmigen, einstückig mit der Schiene (3) ausgebildeten Materialstreifen gebildet ist, der um das Ende des kurzen Schenkels (13) um 90° zur Rückseite der Schiene (3) hin abgebogen ist und dessen langer Schenkel im Anschlußbereich an den kurzen Schenkel zur Bildung des Haltehakens (5) parallel zur Schiene (3) gerichtet verläuft, wobei dessen freies Ende, das den Verlängerungsbereich bildet, um 90° quer zur Schienenlängserstreckung zum zweiten Haltehaken (5) hin gerichtet abgebogen ist.

3. Kraftfahrzeug nach Anspruch 1 oder 2, **dadurch gekennzeichnet, daß** der zweite Haltehaken (5) samt Verlängerung (12) durch einen etwa T-förmigen einstückig mit der Schiene (3) ausgebildeten Materialstreifen gebildet ist, der um das Ende des Fußteiles (14) der T-Form um 90° zur Rückseite der Schiene (3) hin abgebogen ist, wobei das eine Ende des Quersteges der T-Form parallel zum ersten Haltehaken (5) gerichtet verläuft und den zweiten Haltehaken (5) bildet, während das andere Ende des Quersteges der T-Form, das den Verlängerungsbereich (12) bildet, um 90° quer zur Schienenlängserstreckung zum kurzen Schenkel (13) des L-förmigen Materialstreifens hin gerichtet abgebogen ist.

4. Kraftfahrzeug nach einem der Ansprüche 1 bis 3, **dadurch gekennzeichnet, daß** der zwischen den Haltehaken (5) und den Verlängerungsbereichen (11,12) einerseits und der Schiene (3) andererseits gebildete Schlitz (15) gering breiter ist als der Materialstärke der Säule (2) im Bereich des Fensterausschnitts (6) entspricht.

5. Kraftfahrzeug nach einem der Ansprüche 1 bis 4, **dadurch gekennzeichnet, daß** die Schiene (3) nahe ihrer beiden Längsenden und im Mittellängsbereich Haltehakenpaare (5) aufweist, daß die von den Haken (5) übergreifbaren Bereiche der Säulen (2) oder dergleichen Karosserieteilen verstärkungslos ausgebildet sind.

6. Kraftfahrzeug nach einem der Ansprüche 1 bis 5, **dadurch gekennzeichnet, daß** mindestens drei Hakenpaare ausgebildet sind, von denen zwei Paare nahe der Schienenenden und eines etwa mittig zwischen diesen angeordnet sind.

7. Kraftfahrzeug nach einem der Ansprüche 1 bis 6, **dadurch gekennzeichnet, daß** das in Einbaurichtung obere Ende der Schiene (3) über die dortigen Haken (5) verlängert ist und in diesem Bereich (7) von einer an der Karosseriesäule (2) oder Karosserieteil befestigbaren Kopfschraube durchsetzbar ist.

8. Kraftfahrzeug nach einem der Ansprüche 1 bis 7, **dadurch gekennzeichnet, daß** die Haken (5) samt Verlängerungsbereichen aus abgewinkelten Randkanten der Schiene (3) ausgeformt sind.

## Claims

1. Motor vehicle having a coachwork part, a B-column or C-column and having height-adjustable return anchorage, attached thereto, for seatbelts for fitting in the motor vehicle, comprising a bar which can be mounted in a positionally fixed manner on the coachwork part or the column and a carriage, guided with latchable adjustment on the bar, as anchorage for the return anhorage, wherein the bar has a retaining hook pair which projects orthogonally from the peripheral edges of the bar to the back of the bar, which retaining hook pairs are insertable into column-side perforations or perforations in the coachwork part, characterized in that the column-side perforation or perforation in the coachwork part is formed as window recess (6) for a retaining hook pair (5), in that the first retaining hook (5) of a retaining hook pair has an extension region (11) which adjoins the unsupported end of the retaining hook (5), and the second retaining hook (5) of the retaining hook pair has an extension region (12) which adjoins the supported end of the retaining hook (5), in that both extension regions (11, 12) are directed transversely to the bar longitudinal extension at the back of the bar (3) and bear by means of their unsupported end on the supported end of the first retaining hook (5) or on the unsupported end of the second retaining hook (5), wherein the frame formed in this way from the retaining hooks (5) and the extensions (11, 12) is insertable in the window recess (6) of the column (2) or into a similar coachwork part and, with bar (3) inserted in the recess (6) and displaced in the longitudinal direction of the bar, the retaining hooks (5) engage over the one peripheral edge of the recess (6), which peripheral edge is directed transversely to the longitudinal direction of the bar and is situated at the bottom in the required vertical installation position.

2. Motor vehicle according to Claim 1, characterized in that the first retaining hook (5), together with extension (11), is formed by a roughly L-shaped material strip which is formed integrally with the bar (3) and is bent through 90° towards the rear of the bar (3) around the end of the short limb (13) and whose long limb is extends so as to be directed parallel to the bar (3) to form the retaining hook (5) in the region where it adjoins the short limb, wherein its unsupported end, which forms the extension region, is bent through 90° so as to be directed transversely to the longitudinal extension of the bar towards the second retaining hook (5).

3. Motor vehicle according to Claim 1 or 2, characterized in that the second retaining hook (5), together with extension (12), is formed by a roughly T-shaped material strip which is formed integrally with the bar (3) and which is bent through 90° around the end of the root part (14) of the T-shaped towards the back of the bar (3), wherein the one end of the transverse web of the T-shape extends so as to be directed parallel to the first retaining hook (5) and forms the second retaining hook (5), while the other end of the transverse web of the T shape, which transverse web forms the extension region (12), is bent through 90° transversely to the longitudinal extension of the bar so as to be directed towards the short limb (13) of the L-shaped material strip.

4. Motor vehicle according to one of Claims 1 to 3, characterized in that the slot (15) formed between the retaining hooks (5) and the extension regions (11, 12), on the one hand, and the bar (3), on the other hand, is slightly wider than corresponds to the material thickness of the column (2) in the region of the window recess (6).

5. Motor vehicle according to one of Claims 1 to 4, characterized in that the bar (3) has, near its two longitudinal ends and in the central longitudinal region, retaining hook pairs (5) and in that those regions of the columns (2) or similar coachwork parts which can be engaged over by the hooks (5) are formed without reinforcement.

6. Motor vehicle according to one of Claims 1 to 5, characterized in that at least three hook pairs are formed, of which two pairs are disposed near the bar ends and one pair is disposed roughly centrally between them.

7. Motor vehicle according to one of Claims 1 to 6, characterized in that that end of the bar (3) which is uppermost in the installation direction is extended beyond the hooks (3) at that point and, in said region (7), can be pierced by a headed screw which can be attached to the coachwork column (2) or coachwork part.

8. Motor vehicle according to one of Claims 1 to 7, characterized in that the hooks (5), together with the extension regions, are formed from angled peripheral edges of the bar (3).

## Revendications

1. Véhicule à moteur présentant une partie de carrosserie, un montant B ou C et une ferrure de guidage réglable en hauteur et pouvant s'y fixer, ladite ferrure de guidage qui reçoit la ceinture de sécurité étant destinée à être installée dans le véhicule à moteur et se composant d'un rail pouvant être fixé de façon non amovible à la partie de carrosserie ou au montant, et d'un coulisseau glissant le long du rail pouvant être ajusté au moyen de crans et qui fait office de support de la ferrure de guidage, le rail présentant des paires de crochets de maintien saillants, qui partent des faces latérales du rail pour aller vers l'arrière du rail selon un plan orthogonal et qui peuvent se loger dans des orifices aménagés à l'intérieur du montant ou dans des orifices aménagés dans la partie de carrosserie, caractérisé en ce que l'orifice aménagé à l'intérieur du montant ou l'orifice aménagé dans la partie de carrosserie est conçu comme une ouverture découpée (6) destinée à recevoir une paire de crochets de maintien (5), en ce que le premier crochet de maintien (5) d'une paire de crochets de maintien présente une zone de prolongement (11) qui se raccorde à l'extrémité libre du crochet de maintien (5), en ce que le deuxième crochet de maintien (5) de la paire de crochets de maintien présente une zone de prolongement (12) qui se raccorde à l'extrémité non libre du crochet de maintien (5), en ce que les deux zones de prolongement (11, 12) à l'arrière du rail (3) sont orientées transversalement par rapport à la trajectoire longitudinale du rail et que leur extrémité libre repose sur l'extrémité non libre du premier crochet de maintien (5) ou sur l'extrémité libre du deuxième crochet de maintien (5), de sorte que le cadre ainsi formé à partir des crochets de maintien (5) et des prolongements (11, 12) peut venir se loger dans l'ouverture découpée (6) du montant (2) ou de celle de la partie de carrosserie, et les crochets de maintien (5), quand le rail est logé dans l'ouverture découpée (6) et qu'il est poussé dans le sens longitudinal du rail (3) empiètent sur un bord latéral de l'ouverture découpée (6) qui se trouve orientée de biais par rapport à la trajectoire longitudinale du rail et, en position théorique de montage vertical, en dessous.

2. Véhicule à moteur selon la Revendication 1, caractérisé en ce que le premier crochet de maintien (5) y compris son prolongement (11) est conçu sous la forme d'une patte de matériau formée d'une seule pièce avec le rail (3) et présentant approximativement la forme d'un L, qui se replie à 90 ° au niveau de l'extrémité du côté court du coude (13) vers l'arrière du rail (3) et dont le côté long du coude passe dans la zone de raccordement au côté court du coude et forme ainsi le crochet de maintien (5) sur un plan orienté parallèlement au rail (3), de sorte que son extrémité libre, qui constitue la zone de prolongement, est repliée à 90 ° transversalement à la trajectoire longitudinale du rail jusqu'au deuxième crochet de maintien (5).

3. Véhicule à moteur selon la Revendication 1 ou 2, caractérisé en ce que le deuxième crochet de maintien (5) y compris son prolongement (12) est conçu sous la forme d'une patte de matériau formée d'une seule pièce avec le rail (3) et présentant approximativement la forme d'un T, qui se replie à 90 ° au niveau de l'extrémité de la pièce constituant la base (14) en forme de T vers l'arrière du rail (3), de sorte que l'une des extrémités de la traverse en forme de T passe selon un plan parallèle au premier crochet de maintien (5) et constitue le deuxième crochet de maintien (5), alors que l'autre extrémité de la traverse en forme de T, qui constitue la zone de prolongement (12), est repliée à 90 ° transversalement à la trajectoire longitudinale du rail jusqu'au côté court du coude (13) de la patte de matériau en L.

4. Véhicule à moteur selon l'une des Revendications 1 à 3, caractérisé en ce que la fente (15) formée entre les crochets de maintien (5) et les zones de prolongement (11, 12) d'une part, et le rail (3) d'autre part, est à peine plus large que l'épaisseur du matériau du montant (2) dans la zone de l'ouverture découpée (6).

5. Véhicule à moteur selon l'une des Revendications 1 à 4, caractérisé en ce que le rail (3) à proximité de ses deux extrémités longitudinales et dans sa zone longitudinale médiane présente des paires de crochets de maintien (5), en ce que les zones des montants (2) ou celles des parties de la carrosserie sur lesquelles viennent empiéter les crochets (5) sont conçues sans présenter de renforts.

6. Véhicule à moteur selon l'une des Revendications 1 à 5, caractérisé en ce qu'au moins trois paires de crochets sont conçues, dont deux paires sont disposées à proximité des extrémités du rail et l'autre approximativement au milieu de l'espace séparant celles-ci.

7. Véhicule à moteur selon l'une des Revendications 1 à 6, caractérisé en ce que l'extrémité supérieure du rail (3) dans le sens du montage, est prolongée au-delà des crochets en place (5) et qu'elle peut être ancrée dans cette zone (7) au moyen d'une vis à tête pouvant être fixée dans le montant de la carrosserie (2) ou dans la partie de la carrosserie.

8. Véhicule à moteur selon l'une des Revendications 1 à 7, caractérisé en ce que les crochets (5) y compris les zones de prolongement sont formés à partir de faces latérales du rail (3) repliées.
